# EUROPEAN PATENT APPLICATION

(11) **EP 3 054 610 A1**
(43) Date of publication of application: **10.08.2016**
(21) Application number: 14795111.5
(22) Date of filing: 30.04.2014
(51) Int. Cl.: H04J 14/02, H04B 10/25

(54) **OPTICAL SIGNAL PROCESSING METHOD, OPTICAL MODULE AND OPTICAL LINE TERMINAL**

(30) Priority: 30.09.2013 CN 201310462295
(71) Applicant: ZTE Corporation, Shenzhen, Guangdong 518057 (CN)
(72) Inventor: KUANG, Guohua, Shenzhen Guangdong 518057 (CN); FU, Zhiming, Shenzhen Guangdong 518057 (CN); LI, Kun, Shenzhen Guangdong 518057 (CN); CHEN, Lei, Shenzhen Guangdong 518057 (CN); ZHU, Songlin, Shenzhen Guangdong 518057 (CN)
(74) Representative: Brevalex
(86) International application number: PCT/CN2014/076570
(87) International publication number: WO 2014/180273

(57) **Abstract**

The embodiments of the present disclosure disclose a method for processing optical signals, an optical module, an Optical Line Terminal (OLT) optical signal processing method and an OLT. The optical module includes two photoelectric transmitter and receiver units and a Wavelength Division Multiplexing (WDM) unit. Each photoelectric transmitter and receiver unit is configured to generate a downstream optical signal with a corresponding rate and wavelength according to an electric signal, and then output the downstream optical signal to the WDM unit; and receive an upstream optical signal outputted by the WDM unit with a rate and wavelength corresponding to a burst mode, and convert the upstream optical signal into the electric signal. The WDM unit is configured to, after receiving the downstream optical signals outputted by the two photoelectric transmitter and receiver units, perform WDM on the downstream optical signals, and then output the downstream optical signals; and receive the upstream optical signal, de-multiplex the upstream optical signal to obtain upstream optical signals with different rates and wavelengths, and output the upstream optical signals to the corresponding photoelectric transmitter and receiver units respectively.

## Description

### TECHNICAL FIELD

The present disclosure relates to the field of optical communications, and in particular to a method for processing optical signals, an optical module and an Optical Line Terminal (OLT).

### BACKGROUND

With the rapid development of optical fibre communication technologies and the promotion and popularization of optical fibre access technologies, demands of people for bandwidth are unceasingly increased, and a technology capable of providing higher bandwidth becomes a solution for a next generation broadband access network.

A technical solution is mature and stable for products which have been largely applied to the business. In consideration of cost and maintenance, the smooth upgrade of a system is also required to be taken into consideration according to a solution for higher bandwidth. However, the problem of smooth upgrade of the system caused by using of the higher bandwidth is not yet solved in the traditional art. The compatibility of a traditional mature technology is not yet considered, and therefore an Optical Network Unit (ONU) can select a solution according to a specific application environment.

### SUMMARY

The present disclosure provides a method for processing optical signals, an optical module and an OLT, which are intended to solve the technical problem of smooth upgrade of a passive optical network.

In order to solve the technical problem, an embodiment of the present disclosure provides an optical module of an OLT, which may include two photoelectric transmitter and receiver units and a Wavelength Division Multiplexing (WDM) unit.

Each photoelectric transmitter and receiver unit is configured to: generate a downstream optical signal with a corresponding rate and wavelength according to an electric signal, and then output the downstream optical signal to the WDM unit; and receive an upstream optical signal outputted by the WDM unit with a rate and wavelength corresponding to a burst mode, and convert the upstream optical signal into the electric signal.

The WDM unit is configured to: after receiving the downstream optical signals outputted by the two photoelectric transmitter and receiver units, perform WDM on the downstream optical signals, and then output the downstream optical signals; and receive the upstream optical signal, de-multiplex the upstream optical signal to obtain upstream optical signals with different rates and wavelengths, and output the upstream optical signals to the corresponding photoelectric transmitter and receiver units respectively.

Preferably, each photoelectric transmitter and receiver unit may include:
a laser drive unit, configured to receive the corresponding electric signal, convert the electric signal into a laser drive signal, and output the laser drive signal to a laser; and
the laser, configured to generate the corresponding downstream optical signal after receiving the laser drive signal.

Preferably, each photoelectric transmitter and receiver unit may include:
a photoelectric receiving diode, configured to receive the upstream optical signal with the corresponding rate and wavelength outputted by the WDM unit, convert the upstream optical signal into a corresponding current signal, and send the current signal to a trans-impedance amplifier in a burst mode;
the trans-impedance amplifier, configured to convert the received current signal into a differential voltage signal, and send the differential voltage signal to a limiting amplifier in a burst mode; and
the limiting amplifier, configured to process and output the differential voltage signal.

Preferably, each photoelectric transmitter and receiver unit may further include:
a RESET bleeder circuit, configured to process a residual signal level of the limiting amplifier after receiving a RESET signal.

Preferably,
one of the photoelectric transmitter and receiver units may be configured to generate a downstream optical signal which has a first downstream signal rate and is transmitted in a first downstream wavelength continuous mode, and receive an upstream optical signal which has a first upstream signal rate and a first upstream wavelength;
the other photoelectric transmitter and receiver unit may be configured to generate a downstream optical signal which has a second downstream signal rate and is transmitted in a second downstream wavelength continuous mode, and receive an upstream optical signal which has a second upstream signal rate and a second upstream wavelength; and
the ranges of the first downstream wavelength, the second downstream wavelength, the first upstream wavelength and the second upstream wavelength may be not overlapped.

An embodiment of the present disclosure also provides an OLT, which may include the above-mentioned optical module.

An embodiment of the present disclosure also provides an optical signal processing method, which may include that:
a first downstream optical signal which has a first downstream signal rate and is transmitted in a first downstream wavelength continuous mode is generated, and a second downstream optical signal which has a second downstream signal rate and is transmitted in a second downstream wavelength continuous mode is generated;
WDM is performed on the first downstream optical signal and the second downstream optical signal, and then the first downstream optical signal and the second downstream optical signal are output;
a first upstream optical signal which has a first upstream signal rate and a first upstream wavelength and a second upstream optical signal which has a second upstream signal rate and a second upstream wavelength are received; and
the first upstream optical signal and the second upstream optical signal are de-multiplexed.

An embodiment of the present disclosure also provides a computer storage medium in which computer executable instructions are stored. The computer executable instructions are used for executing the above-mentioned method.

The embodiments of the present disclosure provide the optical signal processing method, the optical module and the OLT. The OLT can support multiple passive optical networks, particularly a Gigabit Passive Optical Network (GPON) and a 10G PON (XGPON1) which currently exist. The OLT supports a traditional GPON OLT technical solution and also supports an XGPON1 high-rate technical solution. The smooth upgrade of a GPON system can be realized, and the system upgrade cost, operation cost and maintenance cost of an operator are reduced.

### BRIEF DESCRIPTION OF THE DRAWINGS

Fig. 1 is a diagram of an OLT according to an embodiment of the present disclosure;
Fig. 2 is a system structure diagram according to an embodiment 1 of the present disclosure;
Fig. 3 is a functional principle block diagram according to an embodiment 1 of the present disclosure;
Fig. 4 is a system structure diagram according to an embodiment 2 of the present disclosure; and
Fig. 5 is a functional principle block diagram according to an embodiment 2 of the present disclosure.

### DETAILED DESCRIPTION

In order to make the purpose, technical solution and advantages of the present disclosure clearer, the embodiments of the present disclosure will be described below with reference to the drawings in detail. It is important to note that the embodiments in the present disclosure and the characteristics in the embodiments can be randomly combined with each other under the condition of no conflicts.

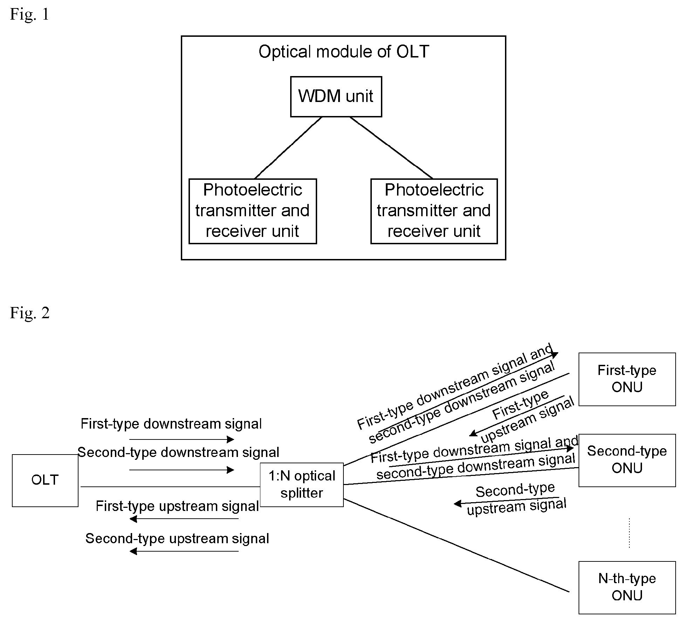

Fig. 1 is a diagram of an optical module of an OLT according to an embodiment of the present disclosure. As shown in Fig. 1, the optical module according to the embodiment includes: two photoelectric transmitter and receiver units and a WDM unit.

Each photoelectric transmitter and receiver unit is configured to: generate a downstream optical signal with a corresponding rate and wavelength according to an electric signal, and then output the downstream optical signal to the WDM unit; and receive an upstream optical signal with a rate and wavelength corresponding to a burst mode output by the WDM unit, and convert the upstream optical signal into the electric signal.

The WDM unit is configured to: after receiving the downstream optical signals output by the two photoelectric transmitter and receiver units, perform WDM on the downstream optical signals, and then output the downstream optical signals; and receive the upstream optical signal, de-multiplex the upstream optical signal to obtain upstream optical signals with different rates and wavelengths, and output the upstream optical signals to the corresponding photoelectric transmitter and receiver units respectively.

The embodiment of the present disclosure provides an OLT which supports coexistence of multiple PONs. The OLT can work in a technical solution for higher bandwidth, and can be compatible with a traditional mature commercial solution, the technical problem of smooth upgrade of a PON is solved, and the system upgrade cost, operation cost and maintenance cost of the operator are reduced.

For example, a GPON technology cannot meet increasing demands for broadband services gradually. A higher-bandwidth XGPON1 technology becomes a solution for the next generation broadband access network. In the GPON technology, the OLT is a main device used for connecting an optical fibre main line, and the optical module of the OLT is an important component for realizing GPON optical fibre communication. A current XGPON1 OLT technical solution can realize data transmission at an upstream rate 2.488Gbps (2.5G for short hereinafter) and at a downstream rate 9.95Gbps (10G for short hereinafter), thereby solving the technical bottleneck of the XGPON1.

The GPON technical solution is mature and stable, and has been largely applied to the business. In consideration of cost and maintenance, the smooth upgrade of the system is also required to be taken into consideration in the application of the XGPON1. Thus, the application of the XGPON1 should be compatible with a traditional GPON technology, so that the ONU can select a solution according to the specific application environment.

As shown in Fig. 2, the embodiment of the present disclosure designs an OLT optical transmitter and receiver module which supports the coexistence of two PONs. The using of ONUs in two modes is supported in a coexistence system. The coexisting optical transmitter and receiver module of the embodiment can work in two modes via system selection. In a first OLT mode, a first upstream rate and a first upstream wavelength are adopted, and a transmitting part with a first downstream rate and a first downstream wavelength is adopted. In a second OLT mode, a second upstream rate and upstream wavelength and a second downstream rate and downstream wavelength are adopted.

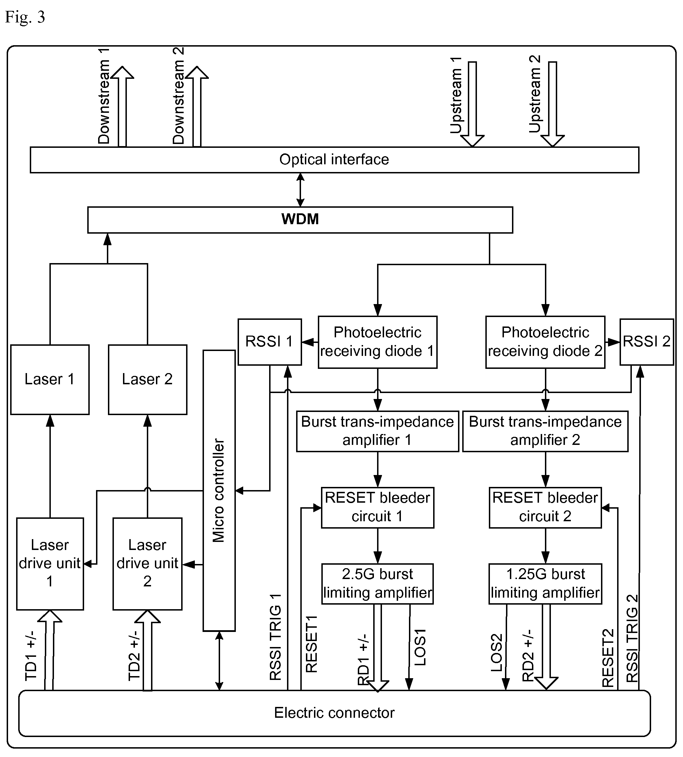

Fig. 3 shows a functional principle block diagram according to an embodiment 1 of the present disclosure, which includes: an electric connector, an optical interface, a wavelength multiplexing unit, a first downstream transmitting part, a second downstream transmitting part, a first upstream burst receiving part, a second upstream burst receiving part and other signal processing parts.

The electric connector is used for connecting a first electric signal and a second electric signal.

The optical interface serves as an input output optical interface for a first upstream optical signal, a second upstream optical signal, a first downstream optical signal and a second downstream optical signal.

The wavelength multiplexing unit multiplexes the first downstream optical signal and the second downstream optical signal, outputs the first downstream optical signal and the second downstream optical signal to the optical interface, de-multiplexes the first upstream signal and the second upstream signal received by the optical interface, and then outputs the first upstream signal and the second upstream signal to corresponding photoelectric detectors, and the photoelectric detectors convert the optical signals into photoelectric current signal.

In the first downstream transmitting part, a first laser drive unit receives the first electric signal transmitted by the electric connector, optimizes a transmitting end electric signal, converts a digital electric signal into a laser drive signal, and drives a first laser to convert the laser drive signal into the first downstream optical signal.

In the second downstream transmitting part, a second laser drive unit receives the second electric signal transmitted by the electric connector, optimizes the transmitting end electric signal, converts the digital electric signal into the laser drive signal, and drives a second laser to convert the laser drive signal into the second downstream optical signal.

A micro control unit can control modulated currents and bias currents of the first laser drive unit and the second laser drive unit, so that an optical power and an extinction ratio, which are output, maintain current values, and meet system requirements.

In the first upstream burst receiving part, a first optical signal received by the optical interface is separated via the WDM unit and then sent to a first photoelectric receiving diode, the first photoelectric receiving diode converts the first optical signal into a current signal and sends the current signal to a first burst mode trans-impedance amplifier, the first burst mode trans-impedance amplifier converts the received current signal into a differential voltage signal, the differential voltage signal passes through a first RESET bleeder circuit and then is sent to a first burst limiting amplifier, and the first burst limiting amplifier performs amplification or limiting reshaping on the received voltage signal, and then outputs the voltage signal to the electric connector.

In the second upstream burst receiving part, a second optical signal received by the optical interface is separated via the WDM unit and then sent to a second photoelectric receiving diode, the second photoelectric receiving diode converts the second optical signal into a current signal and sends the current signal to a second burst mode trans-impedance amplifier, the second burst mode trans-impedance amplifier converts the received current signal into a differential voltage signal, the differential voltage signal passes through a second RESET bleeder circuit and then is sent to a second burst limiting amplifier, and the second burst limiting amplifier performs amplification or limiting reshaping on the received voltage signal, and then outputs the voltage signal to the electric connector.

A burst Received Signal Strength Indicator (RSSI) monitoring unit collects, processes and reports a first burst receiving optical signal and a second burst receiving optical signal respectively, monitors optical power signal strength in real time, and follows an SFF-8472 protocol and other protocols.

According to the RESET burst bleeder circuits, RESET signals are notification signals for notifying that a next group of burst data come. After the RESET bleeder circuits receive the RESET signals, residual signal levels at input ends of the burst limiting amplifiers are cleared in time to ensure accurate receiving of the next group of burst data. A time sequence requirement of the system is met. The two RESET burst bleeder circuits in the embodiment of the present disclosure process the residual signal levels of the limiting amplifiers of two receiving channels respectively, and the time sequence requirement of a coexistence receiving system is met.

The micro control unit controls a signal line or an IIC bus to connect a laser driver, the limiting amplifiers, an RSSI circuit and the like so as to monitor, collect and process corresponding data. An externally connected IIC bus interface is also provided, and is connected to a system panel IIC bus interface via an optical module electric interface so as to diagnose and monitor a digital signal of the optical module via the system.

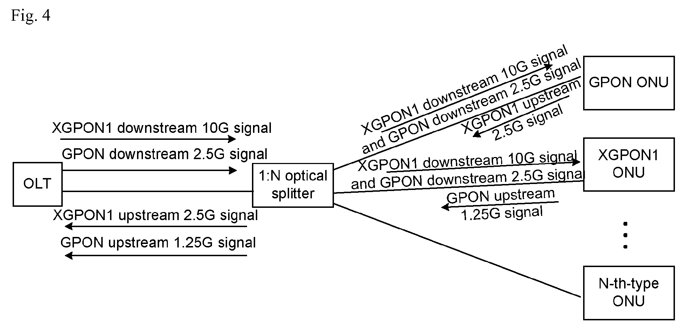

As shown in Fig. 4, the embodiment of the present disclosure is an optical module in which a GPON OLT and an XGPON1 OLT coexist, and using of the GPON OLT and the XGPON1 OLT is supported in the coexistence system. The coexisting OLT optical module in the embodiment can work in two modes via system selection. One of the modes is a GPON OLT mode, an upstream rate is 1.25Gbps, burst receiving by using a 1310nm centre wavelength is performed, a downstream rate is 2.5Gbps, and a transmitting part in a 1490nm centre wavelength continuous mode is adopted. The other mode is an XGPON1 OLT mode, an upstream rate is 2.5Gbps, burst receiving by using a 1270nm centre wavelength is performed, a downstream rate is 10Gbps, and a transmitting part in a 1577nm centre wavelength continuous mode is adopted.

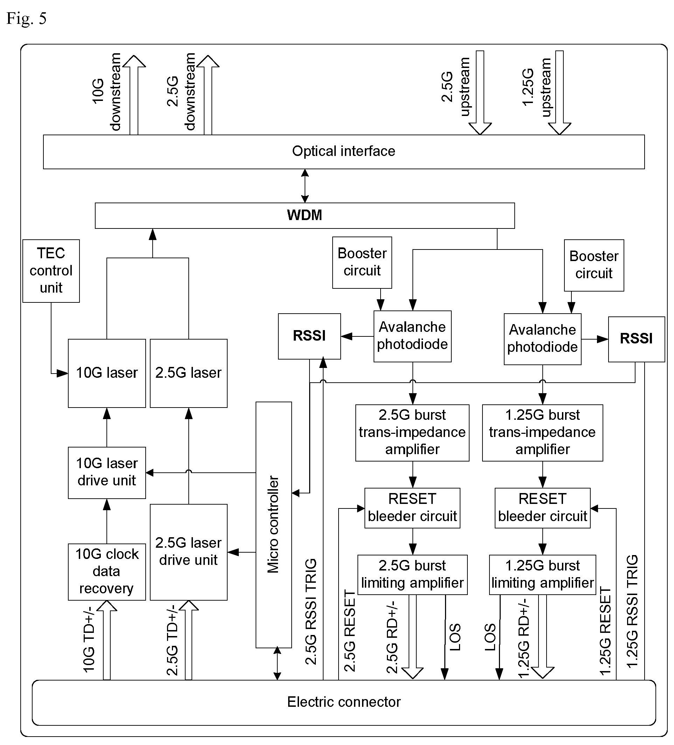

Fig. 5 shows a functional principle block diagram according to a preferred embodiment of the present disclosure. The electric connector adopts a 10Gigabit Small Form Factor Pluggable Module (XFP), and pin function definitions are shown in Table 1 in detail. In the embodiment of the present disclosure, an XFP interface is adopted, levels and functions of each pin of the electric interface are defined, requirements of the system are met, and requirements of an INF-8077 protocol are met.

**Table 1**

| Pin | Symbol | Level | Power on order | Functional description |
|---|---|---|---|---|
| 1 | GND | | 1st | Module ground |
| 2 | TX_FAULT | LVTTL-O | 3rd | A failure indication is transmitted, a low level shows that transmission operation is normal, a high level shows that transmission is faulty, and the pull-up resistance of a mother board is 4.7 to 10kilohm |
| 3 | TX_2.5G_P | LVPECL | 3rd | A2.5G transmitting end differential input is positive, alternating current coupling is performed, and a differential swing ranges from 500 to 2400mV |
| 4 | TX_2.5G_N | LVPECL | 3rd | A 2.5G transmitting end differential input is negative, alternating current coupling is performed, and a differential swing ranges from 500 to 2400mV |
| 5 | TX_DIS | LVTTL-I | 3rd | Enabling is transmitted, disabling is transmitted in high levels 10G and 2.5G, and the internal pull-up resistance of an optical module is 4.7 to 10kilohm |
| 6 | Vcc5 | | 2nd | A 5V power supply is required to be 5V+-5 |
| | | | | percent |
| 7 | GND | | 1st | Module ground |
| 8 | Vcc3__{TX} | | 2nd | A transmitting end power supply is required to be 3.3V+-5 percent |
| 9 | Vcc3__{RX} | | 2nd | A receiving end power supply is required to be 3.3V+-5 percent |
| 10 | SCL | LVTTL-I | 3rd | Two serial interface clock lines are provided, and the pull-up resistance of a mother board is 4.7 to 10kilohm |
| 11 | SDA | LVTTL-I | 3rd | Two serial interface data lines are provided, and the pull-up resistance of a mother board is 4.7 to 10kilohm |
| 12 | MOD_ABS | LVTTL-O | 3rd | An indication indicating that a module is in place, the interior is grounded, the pull-up resistance of a mother board is 4.7 to 10kilohm, and a high level shows that the module is not in place |
| 13 | RESENT_2.5G | LVTTL-O | 3rd | A 2.5G burst receiving RESET signal is shown, and a rising edge is triggered |
| 14 | RX_2.5G_LOS | LVTTL-O | 3rd | A2.5G receiving signal is lost, the pull-up resistance of a mother board is 4.7 to 10kilohm, a high level shows that a receiving optical power is lower than an alarm threshold, and a lower level shows that a receiving end optical power is higher than the alarm threshold |
| 15 | GND | | 1st | Module ground |
| 16 | GND | | 1st | Module ground |
| 17 | RD_2.5G_N | LVPECL/C | 3rd | A 2.5G receiving end differential output is |
| | | ML-O | | negative, and direct current coupling is performed inside a module |
| 18 | RD_2.5G_P | LVPECL/C ML-O | 3rd | A2.5G receiving end differential output is positive, and direct current coupling is performed inside a module |
| 19 | GND | | 1st | Module ground |
| 20 | RX_1.25G_RSSI_ TRIG | LVTTL-O | 3rd | 1.25G RSSI sampling is triggered, and a rising edge is triggered |
| 21 | RX_2.5G_RS SI_TRIG | LVTTL-O | 3rd | 2.5G RSSI sampling is triggered, and a rising edge is triggered |
| 22 | RESET_1.25G | LVTTL-O | 3rd | A 1.25G burst receiving RESET signal is shown, and a rising edge is triggered |
| 23 | GND | | 1st | Module ground |
| 24 | RD_1.25G_N | LVPECL/C ML-O | 3rd | A 1.25G receiving end differential output is negative, and direct current coupling is performed inside a module |
| 25 | RD_1.25G_P | LVPECL/C ML-O | 3rd | A 1.25G receiving end differential output is positive, and direct current coupling is performed inside a module |
| 26 | RX_1.25G_LOS | LVTTL-O | 3rd | A 1.25G receiving signal is lost, the pull-up resistance of a mother board is 4.7 to 10kilohm, a high level shows that a receiving optical power is lower than an alarm threshold, and a lower level shows that a receiving end optical power is higher than the alarm threshold |
| 27 | GND | | 1st | Module ground |
| 28 | TX_10G_N | CML-I | 3rd | A 10G transmitting end differential input is negative, alternating current coupling is |
| | | | | performed inside a module, and an acceptable differential input amplitude of an input end is 200 to 1600mV |
| 29 | TX_10G_P | CML-I | 3rd | A 10G transmitting end differential input is positive, alternating current coupling is performed inside a module, and an acceptable differential input amplitude of an input end is 200 to 1600mV |
| 30 | GND | | 1st | Module ground |

The optical interface adopts an SC mode. A WDM part, a 10G transmitting part, a 2.5G transmitting part, a 2.5G receiving part, a 1.25G receiving part and other signal processing parts are further provided.

In the embodiment, the WDM unit multiplexes a 10G 1577nm centre wavelength transmitting optical signal and a 2.5G 1490nm centre wavelength transmitting optical signal, and outputs the signals to an SC Receptacle optical interface. Meanwhile, a 2.5G 1270nm centre wavelength optical signal and a 1.25G 1310nm centre wavelength optical signal, which are received, are de-multiplexed and output to avalanche photodiodes of a 2.5G receiving part and a 1.25G receiving part respectively.

In the embodiment, the 10G transmitting part includes: a 10G clock data recovery unit, a 10G laser driver unit, a 10G laser, a Thermo Electric Cooler (TEC) control unit and a micro control unit part.

In the embodiment, the 10G laser adopts an Electro-absorption Modulated Laser (EML), and the 10G laser driver unit adopts an EML drive chip. The 10G clock data recovery unit performs jitter optimization on a transmitting end electric signal, sends data into a 10G EML laser driver unit, drives the laser, and converts the signal into an optical signal. The micro control unit part controls a drive current output by the drive unit, so that an optical signal index is in accordance with a corresponding standard and keeps stable and reliable. The TEC control unit controls a TEC in the EML, keeps an output wavelength of the laser stable, and meets the requirements of the system.

In the embodiment, the 2.5G transmitting part includes: a 2.5G laser driver unit, a 2.5G laser and a micro control unit part. In the embodiment of the present disclosure, a 2.5G Distributed Feed Back (DFB) laser and a 2.5G DFB laser drive chip are adopted. The driver unit receives a 2.5G data signal transmitted by the electric connector of the optical module, and converts a digital signal into a laser drive signal, and drives the 2.5G DFB laser to convert the laser drive signal into an optical signal. The micro control unit part performs drive output current control on a driver chip, so that a 2.5G optical signal index is stable and meets the requirements of the system.

In the embodiment, the 2.5G receiving part includes: an avalanche photodiode, a booster circuit, a 2.5G burst trans-impedance amplifier, a RESET bleeder circuit, a 2.5G burst limiting amplifier, a burst RSSI monitoring unit and a micro control unit part. In the embodiment of the present disclosure, the avalanche photodiode converts an optical signal with a 2.5G 1270nm centre wavelength, which is de-multiplexed by the WDM unit, into a current signal, and sends the current signal to the 2.5G burst trans-impedance amplifier; and due to the fact that an XGPON1 upstream adopts a time division multiplexing mode, the optical signal received by the OLT is in a burst mode, and the received current signal is quickly converted into a differential voltage signal by using the burst trans-impedance amplifier, and the differential voltage signal is sent to the RESET bleeder circuit. A RESET signal is a notification signal for notifying that a next group of burst data come. After the RESET bleeder circuit receives the RESET signal, a residual signal level at an input end of the 2.5G burst limiting amplifier is cleared in time to ensure accurate receiving of the next group of burst data. The 2.5G burst limiting amplifier performs amplification or limiting reshaping on the received voltage signal, and then outputs the voltage signal to the electric connector.

In the embodiment, the 1.25G receiving part includes: an avalanche photodiode, a booster circuit, a 2.5G burst trans-impedance amplifier, a RESET bleeder circuit, a 2.5G burst limiting amplifier, a burst RSSI monitoring unit and a micro control unit part. An optical signal with a 1.25G 13100nm centre wavelength, which is de-multiplexed by the WDM unit, is input to the 1.25G receiving part. A signal processing principle of the 1.25G receiving part is similar to that of the 2.5G receiving part. Channel bandwidth is restricted to be suitable for a 1.25G signal rate, so that a receiving sensitivity is at an optimum point. A 1.25G signal passes through the trans-impedance amplifier, the RESET bleeder circuit and the burst limiting amplifier, and then is output to the electric connector.

In the embodiment, the booster circuit outputs an optimum bias voltage of an optimum sensitivity needed by the avalanche photodiode, and an output voltage range is controlled by the micro control unit so as to make it meet an optimum bias voltage variation of the avalanche photodiode along with a temperature variation. In the embodiment, two booster circuits are provided to provide bias voltages for the avalanche photodiodes of the 2.5G receiving part and the 1.25G receiving part, and each booster circuit includes a switching power supply and a charge pump composed of a diode, an inductor and a capacitor.

The burst RSSI unit collects, processes and reports burst receiving optical signals. In the embodiment, an avalanche photodiode photoelectric current mirroring and burst sampling retaining circuit is adopted, and the micro control unit performs digital conversion calibration on an analogue signal of the sampling retaining circuit, and then reports the signal to the system. In the embodiment, two RSSI processing units monitor receiving optical powers of the 2.5G receiving part and the 1.25G receiving part respectively, and monitor burst receiving optical power signal strengths in real time according to an SFF-8472 protocol and an INF-8077 protocol.

According to the RESET burst bleeder circuit, a RESET signal is a notification signal for notifying that a next group of burst data come. After the RESET bleeder circuit receives the RESET signal, a residual signal level at an input end of the burst limiting amplifier is cleared in time to ensure accurate receiving of the next group of burst data. A time sequence requirement of the system is met. The RESET burst bleeder circuits in the embodiment process residual levels of the input ends of the burst limiting amplifiers of the 2.5G receiving part and the 1.25G receiving part respectively before burst signals are received, and it is ensured that two burst data are accurately received.

In the embodiment of the present disclosure, an OLT which supports the coexistence of the GPON and the XGPON1 is preferred as an embodiment, and both the traditional GPON technical solution and the XGPON1 high-rate technical solution are supported.

Based on the optical module of the OLT provided by the embodiment of the present disclosure, an embodiment of the present disclosure provides an optical signal processing method, which includes the steps as follows.

S11: An optical module of an OLT generates a first downstream optical signal which has a first downstream signal rate and is transmitted in a first downstream wavelength continuous mode, and a second downstream optical signal which has a second downstream signal rate and is transmitted in a second downstream wavelength continuous mode.

S12: The optical module of the OLT multiplexes the first downstream optical signal and the second downstream optical signal, and then outputs the first downstream optical signal and the second downstream optical signal.

S21: The optical module of the OLT receives a first upstream optical signal which has a first upstream signal rate and a first upstream wavelength, and receives a second upstream optical signal which has a second upstream signal rate and a second upstream wavelength.

S22: The optical module of the OLT de-multiplexes the first upstream optical signal and the second upstream optical signal.

An embodiment of the present disclosure also provides a computer storage medium in which computer executable instructions are stored. The computer executable instructions are used for executing the above-mentioned method.

Each unit can be realized by a Central Processing Unit (CPU), a Digital Signal Processor (DSP) or a Field-Programmable Gate Array (FPGA) in an electronic device.

Those skilled in the art should understand that the embodiments of the present disclosure can provide a method, a system or a computer program product. Thus, forms of hardware embodiments, software embodiments or embodiments integrating software and hardware can be adopted in the present disclosure. Moreover, a form of the computer program product implemented on one or more computer available storage media (including, but not limited to, a disk memory, an optical memory and the like) containing computer available program codes can be adopted in the present disclosure.

The present disclosure is described with reference to flowcharts and/or block diagrams of the method, the device (system) and the computer program product according to the embodiments of the present disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

The above is only a preferred embodiment of the present disclosure. Certainly, the present disclosure may also have other embodiments. Those skilled in the art can make various corresponding variations and modifications according to the present disclosure without departing from the spirit and essence of the present disclosure, but these corresponding variations and modifications shall fall within the protection scope of attached claims of the present disclosure.

## Claims

1. An optical module, comprising two photoelectric transmitter and receiver units and a Wavelength Division Multiplexing (WDM) unit, wherein
each photoelectric transmitter and receiver unit is configured to generate a downstream optical signal with a corresponding rate and wavelength according to an electric signal, and then output the downstream optical signal to the WDM unit; and receive an upstream optical signal outputted by the WDM unit with a rate and wavelength corresponding to a burst mode, and convert the upstream optical signal into the electric signal; and
the WDM unit is configured to, after receiving the downstream optical signals outputted by the two photoelectric transmitter and receiver units, perform WDM on the downstream optical signals, and then output the downstream optical signals; and receive the upstream optical signal, de-multiplex the upstream optical signal to obtain upstream optical signals with different rates and wavelengths, and output the upstream optical signals to the corresponding photoelectric transmitter and receiver units, respectively.

2. The optical module according to claim 1, wherein each photoelectric transmitter and receiver unit comprises:
a laser drive unit, configured to receive the corresponding electric signal, convert the electric signal into a laser drive signal, and output the laser drive signal to a laser; and
the laser, configured to generate the corresponding downstream optical signal after receiving the laser drive signal.

3. The optical module according to claim 1, wherein each photoelectric transmitter and receiver unit comprises:
a photoelectric receiving diode, configured to receive the upstream optical signal with the corresponding rate and wavelength outputted by the WDM unit, convert the upstream optical signal into a corresponding current signal, and send the current signal to a trans-impedance amplifier in a burst mode;
the trans-impedance amplifier, configured to convert the received current signal into a differential voltage signal, and send the differential voltage signal to a limiting amplifier in a burst mode; and
the limiting amplifier, configured to process and output the differential voltage signal.

4. The optical module according to claim 3, wherein each photoelectric transmitter and receiver unit further comprises:
a RESET bleeder circuit, configured to process a residual signal level of the limiting amplifier after receiving a RESET signal.

5. The optical module according to any one of claims 1 to 4, wherein
one of the photoelectric transmitter and receiver units is configured to generate a downstream optical signal which has a first downstream signal rate and is transmitted in a first downstream wavelength continuous mode, and receive an upstream optical signal which has a first upstream signal rate and a first upstream wavelength;
the other photoelectric transmitter and receiver unit is configured to generate a downstream optical signal which has a second downstream signal rate and is transmitted in a second downstream wavelength continuous mode, and receive an upstream optical signal which has a second upstream signal rate and a second upstream wavelength; and
the ranges of the first downstream wavelength, the second downstream wavelength, the first upstream wavelength and the second upstream wavelength are not overlapped.

6. An Optical Line Terminal (OLT), comprising the optical module according to any one of claims 1 to 5.

7. An optical signal processing method, comprising:
generating a first downstream optical signal which has a first downstream signal rate and is transmitted in a first downstream wavelength continuous mode, and generating a second downstream optical signal which has a second downstream signal rate and is transmitted in a second downstream wavelength continuous mode;
performing Wavelength Division Multiplexing (WDM) on the first downstream optical signal and the second downstream optical signal, and then outputting the first downstream optical signal and the second downstream optical signal;
receiving a first upstream optical signal which has a first upstream signal rate and a first upstream wavelength, and receiving a second upstream optical signal which has a second upstream signal rate and a second upstream wavelength; and
de-multiplexing the first upstream optical signal and the second upstream optical signal.

8. A computer storage medium, computer executable instructions being stored in the computer storage medium and being configured to execute the method according to claim 7.
